# FASCICULE DE BREVET EUROPEEN

(11) **EP 0 434 496 B1**
(45) Date de publication et mention de la délivrance du brevet: **09.03.1994**
(21) Numéro de dépôt: 90403503.7
(22) Date de dépôt: 10.12.1990
(51) Int. Cl.: B29C 53/80, B31C 3/00

(54) **Dispositif pour conserver l'aplat d'une bande de carton entre deux éléments consécutifs d'une spiraleuse**
Vorrichtung zur Erhaltung der Planlage eines Pappbandes zwischen zwei aufeinanderfolgenden Elementen einer Wickelmaschine
Device for preserving the planarity of a cardboard band between two successive elements of a winding machine

(30) Priorité: 11.12.1989 FR 8916336
(43) Date de publication de la demande: 26.06.1991
(73) Titulaire: SONOCO LHOMME, F-89140 Pont sur Yonne (FR)
(72) Inventeur: Languillat, Jean-Paul, F-89260 Thorigny sur Oreuse (FR)
(74) Mandataire: Chambon, Gérard

(56) Documents cités:
- FR-A- 2 285 982
- US-A- 3 400 029

## Description

### Dispositif pour conserver l'aplat d'une bande de carton entre deux éléments consécutifs d'une spiraleuse.

L'invention concerne un dispositif pour conserver l'aplat d'une bande de carton entre deux éléments consécutifs d'une spiraleuse au cours de la fabrication d'un tube carton, ladite bande étant en contact avec lesdits éléments, respectivement amont et aval par rapport au sens du défilement de la bande, selon au moins deux lignes de contact non parallèles. Le dispositif selon l'invention est plus particulièrement destiné à être aménagé entre l'encolleur et le mandrin d'enroulage de la spiraleuse, lorsque ledit encolleur constitue le dernier moyen utilisé avant le mandrin d'enroulage.

Pour fabriquer un tube carton sur une spiraleuse, on enroule et on colle les unes sur les autres plusieurs bandes de carton qui arrivent sur un mandrin, dit mandrin d'enroulage.

Les bandes arrivent sur le mandrin d'enroulage en faisceau et forment avec celui-ci un certain angle d'enroulement (angle compris, en projection horizontale, entre les bords de la bande et une perpendiculaire audit mandrin), tandis qu'elles sont nécessairement décalées verticalement les unes par rapport aux autres.

Entre un dispositif d'alimentation (dévidoir) et de guidage des bandes de carton et le mandrin d'enroulage, est prévu un encolleur destiné à étendre de la colle sur chaque bande (à l'exception bien sûr de la première).

L'encollage des bandes peut s'effectuer au moyen d'un encolleur pour chaque bande (voire 2 ou 3 bandes), mais pour un grand nombre de bandes, on utilise des encolleurs basés sur un procédé d'immersion ou plus généralement selon le procédé dit "cascade" où "en cascade".

Selon ce dernier procédé, la colle est déversée en vrac sur les bandes supérieures du faisceau. La quantité de colle ainsi apportée par gravité ou au moyen d'une pompe de recyclage est toujours excédentaire par rapport à la quantité finale nécessaire à constituer le film de colle utile qui est obtenu par étalement au moyen d'un système de raclage. Le système de raclage permet d'expulser de part et d'autre de la bande l'excédent de colle qui est bien sûr récupéré dans un conteneur disposé sous les bandes.

Le système de raclage comporte une pluralité de racleurs qui sont disposés de manière que la colle en excès d'une bande tombe sur la bande située immédiatement en dessous et en amont du racleur par rapport au sens de défilement de la bande.

Chaque racleur est disposé de manière sensiblement perpendiculaire à la bande à traiter, tandis qu'ils sont disposés les uns au-dessous des autres selon un plan qui forme avec l'horizontale un certain angle différent de 90°, de manière à permettre l'encollage en cascade précédemment rappelé.

Pour des raisons techniques notamment liées aux matières utilisées et aussi pour faciliter le travail de l'opérateur, l'écartement des racleurs est limité, et par conséquent leur nombre.

Il est connu que les qualités techniques d'une bande carton sont généralement meilleures si l'épaisseur est plus faible.

Pour faire un tube en carton de grande épaisseur, on cherche en conséquence à augmenter le nombre de plis (c'est-à-dire le nombre de bandes constitutives).

Au niveau de l'encolleur, pour augmenter le nombre de bandes, il est possible de diminuer l'angle du plan des racleurs sur l'horizontale de telle sorte que l'on puisse augmenter le nombre desdits racloirs pour une hauteur totale d'encombrement donnée.

Toutefois, cette façon de procéder présente de graves inconvénients. Tout d'abord les longueurs des bandes entre les racleurs et le mandrin sont augmentées ce qui risque de provoquer des instabilités de position relative. En outre, les différences entre les longueurs des bandes sont plus importantes, ce qui cause de plus grandes différences de durée d'application de la colle (en affectant les paramétres de pénétration, de séchage, ...) et provoque donc un pouvoir collant différent d'une bande à l'autre.

Pour ces raisons, l'angle précité ne peut varier que dans une fourchette limitée (par exemple entre 45° et 60°). On peut en outre noter que si l'on parle ici plus spécialement des racleurs pour un dispositif en cascade, le problème est le même pour un encolleur formé d'une série de cylindres encolleurs.

Pour prévoir de nombreuses bandes, il est encore possible de disposer un encolleur de chaque côté du tube en formation, mais il est clair que cette solution est onéreuse, particulièrement encombrante et peu pratique pour l'opérateur.

En outre, l'angle d'enroulement, défini ci-avant, est par ailleurs lié à la largeur des bandes utilisées et au diamètre du tube à fabriquer. Cet angle sera choisi d'autant plus grand (en agissant sur les autres paramètres) que l'on désire utiliser plutôt les caractéristiques du carton dans le sens marche, que les caractéristiques de son sens travers.

Cependant, si l'on augmente cet angle, les racleurs qui sont sensiblement perpendiculaires à la bande forment un angle d'autant plus important avec le mandrin, ce qui cause un mauvais aplat des bandes, et donc entraîne des risques de plissage, mauvais aplat qui augmente aussi en fonction de l'angle d'incidence, c'est à dire l'angle que forme la bande par rapport à l'horizontale.

C'est pourquoi les inventeurs ont imaginé un dispositif qui permet d'améliorer l'aplat des bandes de telle sorte qu'il devient possible d'utiliser un très grand nombre de bandes et/ou un grand angle d'enroulement (avec de larges bandes).

Cependant, on comprendra que l'invention n'est pas limitée aux racleurs des encolleurs, mais à tout élément qui vient en contact avec la bande.

Dans la demande de brevet FR-2285982, on décrit un dispositif qui permet d'éviter la torsion d'une bande destinée à fabriquer des tuyaux par enroulement hélicoidal. Toutefois, ce dispositif est prévu pour une seule bande.

Le dispositif selon l'invention destiné à conserver l'aplat d'une bande carton comme précisé ci-dessus et qui comprend en outre, comme dans le document précité, un moyen de guidage disposé entre les deux éléments consécutifs de la spiraleuse et sur lequel la bande entre en contact selon au moins une ligne, est remarquable en ce que ledit moyen de guidage est monté de manière à pouvoir être disposé de façon telle que sa ligne de contact soit sensiblement parallèle avec la ligne de contact de l'un des éléments et respectivement coplanaire avec la ligne de contact de l'autre élément.

De préférence, le moyen de guidage comporte essentiellement un cylindre de manière telle que la ligne de contact entre la bande et ledit moyen est une génératrice.

Avantageusement, ledit moyen de guidage est mécaniquement lié à l'élément avec lequel il reste coplanaire sans être parallèle, de manière telle qu'ils puissent pivoter l'un par rapport l'autre, leurs lignes de contact avec la bande étant toujours géométriquement concourantes, ledit moyen de guidage étant articulé de manière pivotante sur un élément solidaire ou fixé audit élément par rapport auquel il peut pivoter.

Selon un autre mode de réalisation, le moyen de guidage est mécaniquement lié à l'élément avec lequel il est sensiblement parallèle de manière telle que tout en étant parallèle à ce dernier, il reste coplanaire avec l'autre élément. L'élément avec lequel le moyen de guidage est lié peut-être aussi bien l'élément amont que l'élément aval. L'élément amont est, par exemple, le dernier élément d'un dispositif d'encollage de la bande, tandis que l'élément aval est le mandrin d'enroulage de la spiraleuse.

Le dernier élément du dispositif d'encollage n'est pas nécessairement le racleur dont il a été question ci-avant et il s'agit même, le plus souvent, d'un guide embarreur qui fait suite audit racleur, comme on le comprendra mieux à la suite de la description qui va suivre et qui se réfère aux dessins annexés dans lesquels:
- la figure 1 est un schéma d'une spiraleuse en vue de dessus,
- les figures 2A, 2B et 2C montrent schématiquement avec rabattement (une vue en plan de dessus et une vue en élévation), trois positions des éléments concernés, les positions 2B et 2C étant les mêmes mais avec utlisation dans cette dernière, d'un moyen selon l'invention,
- les figures 3 et 4 montrent un dispositif selon deux modes de réalisation particuliers de l'invention.

La description qui va suivre concerne des modes de réalisation donnés seulement à titre d'exemples non limitatifs, comme il sera précisé de nouveau plus loin.

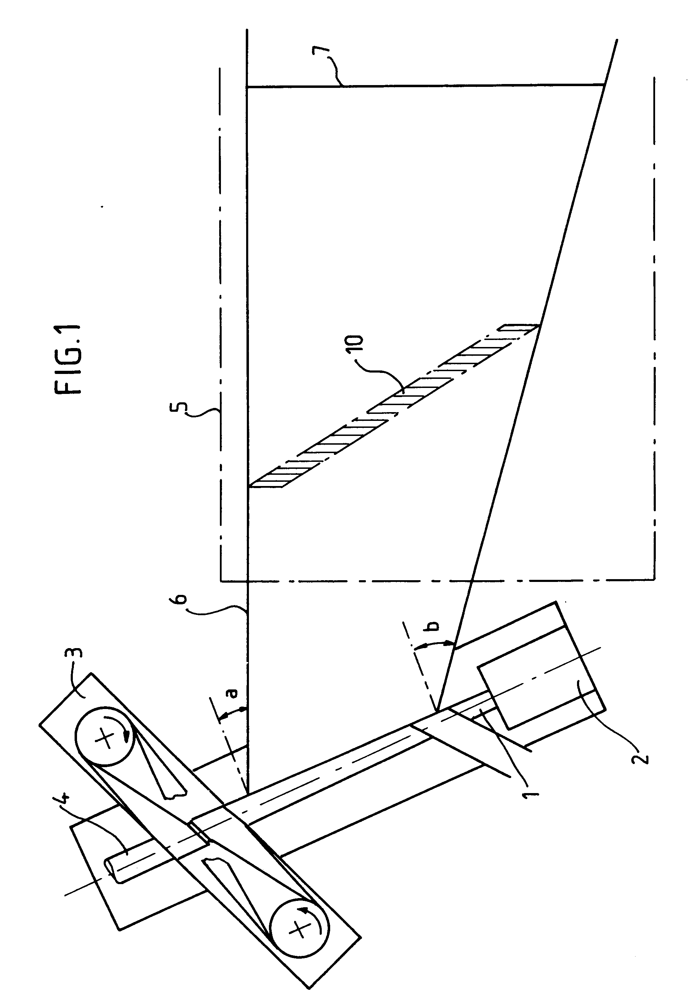

La figure 1 montre une spiraleuse de fabrication d'une tube carton, pourvue de manière classique d'un mandrin d'enroulage 1 fixé sur un support 2, un moyen d'entraînement en rotation 3 du tube 4 en formation et, d'un encolleur schématisé en 5 par une ligne en trait interrompu.

Un faisceau 6 de bandes carton provient d'un dispositif de guidage schématisé en 7, traverse l'encolleur 5, et arrive sur le mandrin d'enroulage 1.

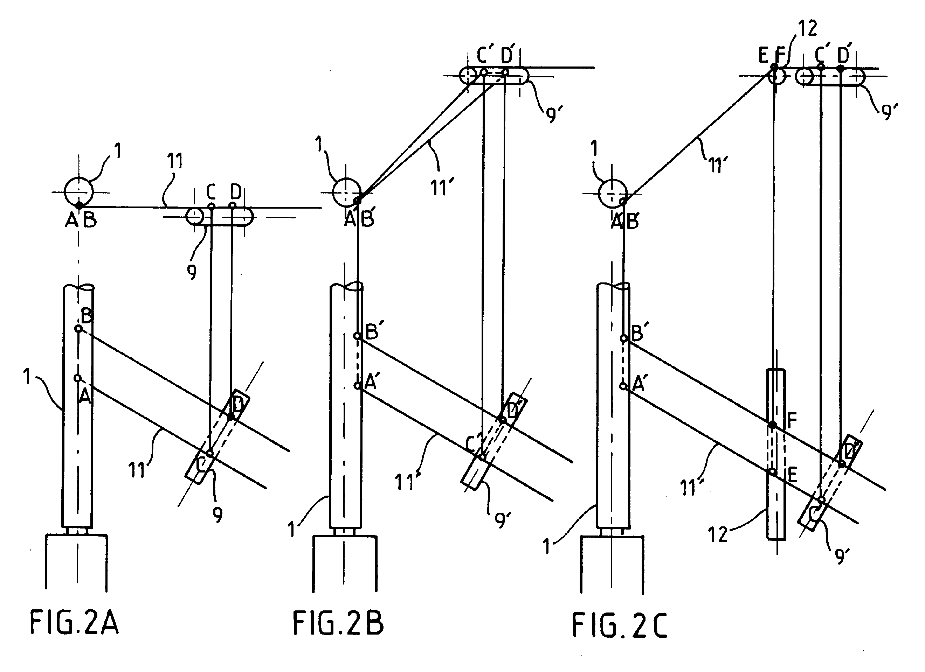

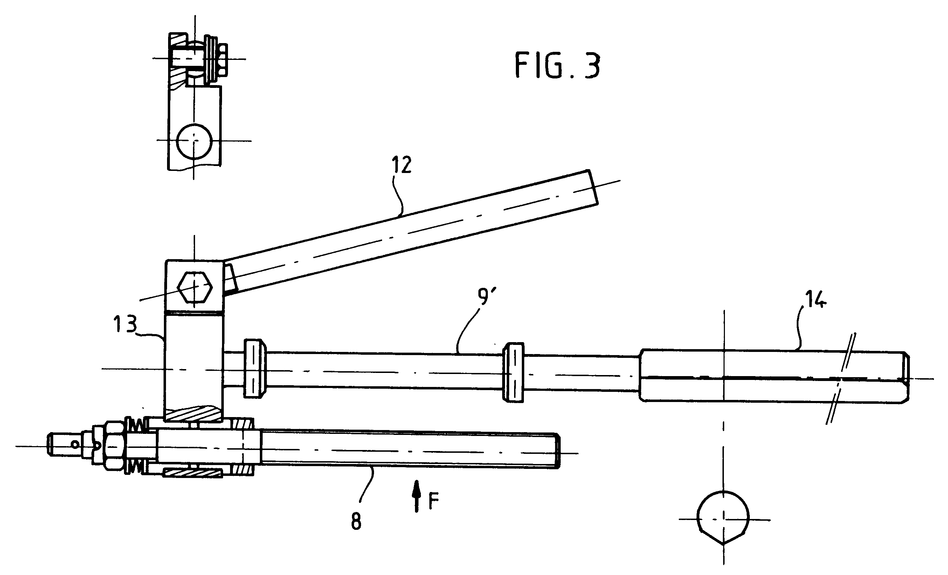

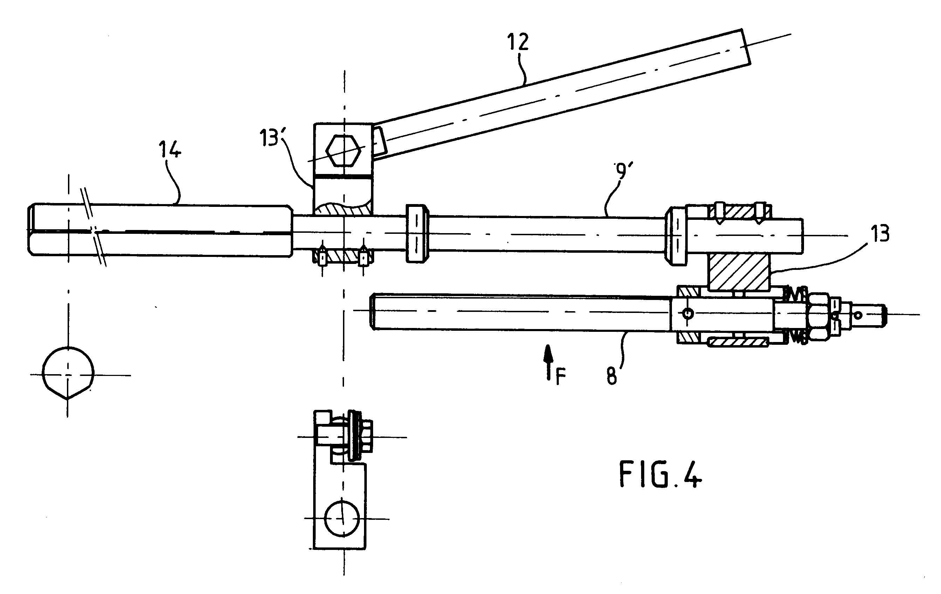

L'encolleur 5 comporte de manière connue un appareil pour déverser la colle en cascade sur les bandes comme mentionné ci-avant, chaque bande étant en contact avec un racleur 8 (figures 3 et 4 dont il sera question ci-après) destiné à étaler la colle et avec un guide embarreur 9 (figures 2, 3 et 4).

L'ensemble des racleurs et des guides embarreurs constitue un système de raclage schématisé en 10 sur la figure 1. Les racleurs et les guides embarreurs sont disposés comme précisé ci-avant, c'est-à-dire de façon sensiblement perpendiculaire aux bandes et selon un plan oblique par rapport à l'horizontale pour permettre le phénomène d'encollage en cascade. En outre les racleurs et les guides s'étalent en vue de dessus comme le montre la figure 1.

Etant donné que les bandes arrivent sur le mandrin 1 selon un certain angle d'enroulement (entre un angle a pour la dernière bande et un angle b assez voisin pour la première et la plus haute des bandes, comme le montre la figure 1), les racleurs et guides forment aussi un angle avec ledit mandrin (en projection horizontale).

Les figures 2A à 2C montrent bien les positions relatives des éléments en cause, à savoir: le mandrin 1, une bande soit 11, soit 11' et un élément tel qu'un guide embarreur 9, 9' la bande 11, 11' venant en contact avec le mandrin 1 selon la ligne AB, A'B' et avec le guide 9, 9' selon la ligne CD, C'D' (on simplifie en parlant de lignes de contact, mais il est évident que chaque bande est en contact sur une certaine surface).

Comme le montre bien la figure 2A la bande 11 arrive sur le mandrin sous un certain angle d'enroulement et selon un plan ABCD, (voir aussi partie en élévation), les lignes de contact AB et CD étant concourantes. Dans la mesure où le mandrin 1 est disposé à l'horizontale, et que la ligne CD du guide 9 est au même niveau, le plan ABCD est ici horizontal. Dans cette position, la bande 11 est donc parfaitement plane et horizontale.

La figure 2B montre une bande 11' qui arrive sur le mandrin 1 en formant un certain angle d'incidence avec ledit mandrin 1, alors que le guide 9' est évidemment plus haut que celui 9 de la figure 2A mais parallèle à ce dernier, les guides restant sensiblement perpendiculaires aux bandes.

Dans ce cas, les lignes de conctact A'B' et C'D' de la bande 11' avec respectivement le mandrin 1 et le guide 9' ne sont plus concourantes et la bande présente une surface gauche avec tous les inconvénients que cela entraîne.

Pour résoudre ce problème, l'invention propose de disposer un cylindre de guidage 12 entre le mandrin 1 et le guide 9' de la manière montrée sur la figure 2C, qui reprend par ailleurs les mêmes éléments que ceux de la figure 2B.

Comme le montre la figure 2C, le moyen de guidage 12 est disposé de manière telle que sa ligne de contact EF avec la bande soit parallèle à la ligne A'B' du mandrin 1 et coplanaire avec la ligne C'D' du guide 9', c'est-à-dire ici dans le même plan horizontal (puisque 9' est horizontal). D'une manière générale, on comprend que la ligne EF est la sécante des plans A'B'EF et C'D'EF formés successivement par la bande 11'. Cette disposition provient de la constatation que pour conserver l'aplat de la bande entre deux éléments qui se suivent, il faut que les deux lignes de contact consécutives soient coplanaires.

Il est clair que les éléments consécutifs entre lesquels on désire conserver l'aplat peuvent être quelconques (éléments de guidage, d'encollage, d'enduction, d'enroulage, etc.), même si ici il s'agit plus particulièrement du mandrin d'enroulage 1 et des éléments 8 et 9', décrits plus en détail ci-après à propos des figures 3 et 4, les références ne devant être nullement limitatives.

Sur les figures 3 et 4, on peut voir un racleur 8 de forme sensiblement cylindrique, fixé à une entretoise 13, elle-même solidaire du guide embarreur 9', dont il a déjà été question ci-avant, qui est sensiblement parallèle audit racleur 8, et qui est destiné à guider et à tendre la bande qui avance selon la flèche F des figures 3 et 4, de telle sorte que l'excès de colle est retenu par le racleur 8 du côté de ladite flèche.

L'ensemble (8, 9', 13) précédemment décrit est monté sur un chassis au moyen d'un support 14 disposé du côté de l'opérateur sur la figure 3 ou du côté opposé sur la figure 4.

Le moyen de guidage 12 selon l'invention sous forme d'un cylindre est alors monté de manière à pouvoir pivoter avantageusement de façon réglable par rapport au guide 9'.

Pour cela, il suffit que le moyen de guidage 12 soit articulé sur l'entretoise 13, comme le montre la figure 3 ou sur un autre élément 13' fixé au guide 9', comme le montre la figure 4.

Il est clair que le moyen de guidage 12 peut alors aisément être disposé de façon parallèle au mandrin d'enroulage, alors que sa génératrice de contact est toujours concourante et donc coplanaire avec celle du guide 9'.

Il y a d'ailleurs lieu de rappeler à ce propos que si la figure 2C montre des lignes EF et C'D' horizontales, cela provient de la disposition même du mandrin 1 (horizontal) et des éléments d'encollage (horizontaux) mais il y a bien sûr lieu de généraliser pour le cas d'éléments non obligatoirement horizontaux, les éléments amont et aval pouvant par ailleurs être intervertis (12 étant parallèle à un élément amont et concourant à un élément aval).

Si l'élément 9, 9' doit être généralisé par tout élément, qu'il s'agisse d'un élément d'encollage, tel un guide embarreur, un cylindre encolleur, le bord d'un bain d'encollage (pour un encolleur non nécessairement en cascade), ou d'un autre type d'élément (renvoi d'angle, ...), il est clair aussi que le guide 12 peut être lié mécaniquement à l'élément avec lequel il est parallèle, ici le mandrin 1. Selon un mode de réalisation (non représenté), les guides 9, 9' peuvent en effet être disposés en formant une sorte de grille, tous les guides étant parallèles entre eux et au mandrin 1, tandis qu'ils peuvent être situés de manière à être chacun coplanaire avec son racleur.

Non seulement le guide 12 peut donc être lié à l'élément amont 9' (comme représenté) ou à l'élément aval 1, mais il peut aussi bien sûr, comme déjà dit, être parallèle à l'élément aval 1 (comme représenté) ou à l'élément amont 9' et simplement coplanaire à l'autre élément respectivement 9' et 1.

## Revendications

1. Dispositif pour conserver l'aplat d'une bande (11,11') de carton entre deux éléments (1,9') consécutifs d'une spiraleuse au cours de la fabrication d'un tube carton (4), ladite bande étant en contact avec lesdits éléments, respectivement aval et amont par rapport au sens du défilement de la bande, selon au moins deux lignes de contact (A'B' et C'D') non parallèles, ledit dispositif comprenant un moyen de guidage (12) disposé entre lesdits éléments (1,9') et sur lequel la bande entre en contact selon au moins une ligne (EF), dispositif caractérisé en ce que le moyen de guidage est monté de manière à pouvoir être disposé de façon telle que sa ligne de contact (EF) soit sensiblement parallèle avec la ligne de contact (A'B') de l'un des éléments et respectivement coplanaire avec la ligne de contact (C'D') de l'autre élément.

2. Dispositif selon la revendication 1, caractérisé en ce que le moyen de guidage (12) comporte essentiellement un cylindre de manière telle que la ligne de contact (EF) entre la bande et ledit moyen est une génératrice.

3. Dispositif selon l'une des revendications 1 et 2, caractérisé en ce que le moyen de guidage (12) est mécaniquement lié à l'élément (9') avec lequel il reste coplanaire sans être parallèle, de manière telle qu'ils puissent pivoter l'un par rapport l'autre, leurs lignes de contact (CD et EF) avec la bande étant toujours géométriquement concourantes.

4. Dispositif selon la revendication 3, caractérisé en ce que le moyen de guidage (12) est articulé de manière pivotante sur un élément (13,13') solidaire ou fixé audit élément (9') par rapport auquel il peut pivoter.

5. Dispositif selon l'une des revendications 1 et 2, caractérisé en ce que le moyen de guidage (12) est mécaniquement lié à l'élément (1) avec lequel il est sensiblement parallèle de manière telle que tout en étant parallèle à ce dernier, il reste coplanaire avec l'autre élément (9').

6. Dispositif selon l'une des revendications 3 à 5, caractérisé en ce que l'élément (9') avec lequel le moyen de guidage (12) est lié, est l'élément amont.

7. Dispositif selon l'une des revendications 3 à 5, caractérisé en ce que l'élément (1) avec lequel le moyen de guidage (12) est lié, est l'élément aval.

8. Dispositif selon l'une des revendications 1 à 7, caractérisé en ce que l'élément amont est le dernier élément d'un dispositif d'encollage (8,9) de la bande et l'élément aval, le mandrin d'enroulage (1) de la spiraleuse.

9. Dispositif selon la revendication 8, caractérisé en ce que le dernier élément du dispositif d'encollage est un guide embarreur (9') qui fait suite à un racleur (8).

## Patentansprüche

1. Vorrichtung zur Erhaltung der Planlage eines Pappbandes (11, 11') zwischen zwei aufeinanderfolgenden Elementen (1, 9') einer Wickelmaschine während der Herstellung eines Papprohres (4), wobei das Band sich entsprechend wenigstens zweier nicht paralleler Berührungslinien (A'B' und C'D') in Berührung mit den Elementen befindet, die, bezogen auf die Laufrichtung des Bandes, vorn bzw. hinten angeordnet sind, und die Vorrichtung ein Führungsmittel (12) aufweist, das zwischen den Elementen (1, 9') angeordnet ist und auf dem das Band entsprechend wenigstens einer Linie (EF) in Berührung kommt, dadurch gekennzeichnet, daß das Führungsmittel derart angebracht ist, daß es so angeordnet werden kann, daß seine Berührungslinie (EF) im wesentlichen parallel zu der Berührungslinie (A'B') eines der Elemente bzw. koplanar mit der Berührungslinie (C'D') des anderen Elementes ist.

2. Vorrichtung gemäß Anspruch 1, dadurch gekennzeichnet, daß das Führungsmittel (12) im wesentlichen einen Zylinder aufweist derart, daß die Berührungslinie (EF) zwischen dem Band und dem Führungsmittel eine Erzeugende ist.

3. Vorrichtung gemäß einem der Ansprüche 1 und 2, dadurch gekenzeichnet, daß das Führungsmittel (12) mit dem Element (9') mechanisch verbunden ist, mit welchem es koplanar bleibt, ohne parallel zu sein derart, daß sie gegeneinander verschwenkbar sind und ihre Berührungslinien (CD und EF) mit dem Band sich immer geometrisch schneiden.

4. Vorrichtung gemäß Anspruch 3, dadurch gekennzeichnet, daß das Führungsmittel (12) an einem Element (13, 13') schwenkbar angebracht ist, welches einstückig mit oder an dem Element (9') befestigt ist, in Bezug auf welches es verschwenkbar ist.

5. Vorrichtung gemäß einem der Ansprüche 1 und 2, dadurch gekennzeichnet, daß das Führungsmittel (12) mit dem Element (1) mechanisch verbunden ist, zu welchem es im wesentlichen parallel ist derart, daß obwohl es zu letzterem parallel ist, es koplanar mit dem anderen Element (9') bleibt.

6. Vorrichtung gemäß einem der Ansprüche 3 bis 5, dadurch gekennzeichnet, daß das Element (9'), mit welchem das Führungsmittel (12) verbunden ist, das in Laufrichtung des Bandes hinten befindliche Element ist.

7. Vorrichtung gemäß einem der Ansprüche 3 bis 5, dadurch gekennzeichnet, daß das Element (1), mit welchem das Führungsmittel (12) verbunden ist, das in Laufrichtung des Bandes vorn befindliche Element ist.

8. Vorrichtung gemäß einem der Ansprüche 1 bis 7, dadurch gekennzeichnet, daß das in Laufrichtung des Bandes hinten befindliche Element das letzte Element einer Beleimungsvorrichtung (8, 9) des Bandes und das in Laufrichtung des Bandes vorn befindliche Element der Wickeldorn (11) der Wickelmaschine ist.

9. Vorrichtung gemäß Anspruch 8, dadurch gekennzeichnet, daß das letzte Element der Beleimungsvorrichtung eine Stangenschieberführung (9') ist, der ein Abstreifer (8) folgt.

## Claims

1. Device for preserving the planarity of a strip (11, 11') of cardboard between two consecutive elements (1, 9') of a spiral winding machine in the course of manufacture of a cardboard tube (4), said strip being in contact with said elements, respectively downstream and upstream in relation to the direction of passage of the strip, along at least two non-parallel lines of contact (A'B' and C'D'), said device comprising a guiding means (12) disposed between said elements (1, 9') and with which the strip comes into contact along at least one line (EF), said device being characterised in that the guiding means is fitted so that it can be disposed such that its line of contact (EF) is substantially parallel with the line of contact (A'B') of one of the elements and respectively coplanar with the line of contact (C'D') of the other element.

2. Device according to claim 1, characterised in that the guiding means (12) essentially comprises a cylinder such that the line of contact (EF) between the strip and said means is a generating line.

3. Device according to claims 1 and 2, characterised in that the guiding means (12) is mechanically linked to the element (9') with which it remains coplanar without being parallel, such that they can pivot one in relation to the other, their lines of contact (CD and EF) with the strip still being geometrically convergent.

4. Device according to claim 3, characterised in that the guiding means (12) is articulated pivotingly on an element (13, 13') integral with or fixed to said element (9') in relation to which it can pivot.

5. Device according to one of claims 1 and 2, characterised in that the guiding means (12) is mechanically linked to the element (1) with which it is substantially parallel such that while being parallel with the latter it remains coplanar with the other element (9').

6. Device according to one of claims 3 to 5, characterised in that the element (9') with which the guiding means (12) is linked is the upstream element.

7. Device according to one of claims 3 to 5, characterised in that the element (1) with which the guiding means (12) is linked is the downstream element.

8. Device according to one of claims 1 to 7, characterised in that the upstream element is the last element of a device (8, 9) for gluing the strip and the downstream element is the winding mandrel (1) of the spiral winding machine.

9. Device according to claim 8, characterised in that the last element of the gluing device is a deflecting guide (9') which follows a doctor (8).
